# EUROPÄISCHE PATENTSCHRIFT

(11) **EP 4 371 084 B1**
(45) Veröffentlichungstag und Bekanntmachung des Hinweises auf die Patenterteilung: **14.05.2025**
(21) Anmeldenummer: 22758471.1
(22) Anmeldetag: 29.07.2022
(51) Int. Cl.: G06V 10/774, G06F 18/214, G06V 10/25

(54) **VERFAHREN ZUM BEREITSTELLEN VON TRAININGS-BILDDATEN ZUM TRAINIEREN EINER FUNKTION**
METHOD FOR PROVIDING TRAINING IMAGE DATA FOR TRAINING A FUNCTION
PROCÉDÉ DE FOURNITURE DE DONNÉES D'IMAGE D'APPRENTISSAGE PERMETTANT L'APPRENTISSAGE D'UNE FONCTION

(30) Priorität: 30.08.2021 EP 21193802
(43) Veröffentlichungstag der Anmeldung: 22.05.2024
(73) Patentinhaber: Siemens Aktiengesellschaft, 80333 München (DE)
(72) Erfinder: FIEBAG, Daniel, 91052 Erlangen (DE); METZNER, Maximilian, 96047 Bamberg (DE); WEISSERT, Sören, 73430 Aalen (DE)
(74) Vertreter: Siemens Patent Attorneys
(86) Internationale Anmeldenummer: PCT/EP2022/071335
(87) Internationale Veröffentlichungsnummer: WO 2023/030783

(56) Entgegenhaltungen:
- ISOGAWA MARIKO ET AL: "Which is the Better Inpainted Image?Training Data Generation Without Any Manual Operations", INTERNATIONAL JOURNAL OF COMPUTER VISION, KLUWER ACADEMIC PUBLISHERS, NORWELL, US, vol. 127, no. 11-12, 26 November 2018 (2018-11-26), pages 1751 - 1766, XP036918184, ISSN: 0920-5691, [retrieved on 20181126], DOI: 10.1007/S11263-018-1132-0
- YUQIAN ZHOU ET AL: "TransFill: Reference-guided Image Inpainting by Merging Multiple Color and Spatial Transformations", ARXIV.ORG, CORNELL UNIVERSITY LIBRARY, 201 OLIN LIBRARY CORNELL UNIVERSITY ITHACA, NY 14853, 29 March 2021 (2021-03-29), XP081918996
- LIN HSIEN-I ET AL: "Image Denoising of Printed Circuit Boards using Conditional Generative Adversarial Network", 2019 IEEE 10TH INTERNATIONAL CONFERENCE ON MECHANICAL AND INTELLIGENT MANUFACTURING TECHNOLOGIES (ICMIMT), IEEE, 15 February 2019 (2019-02-15), pages 98 - 103, XP033548343, DOI: 10.1109/ICMIMT.2019.8712035

## Beschreibung

Die Erfindung wird in den angehängten Ansprüchen definiert.

Die Erfindung betrifft computerimplementierte Verfahren und Systeme zum Bereitstellen bzw. zum Erzeugen und Bereitstellen von Trainings-Bilddaten zum Trainieren einer Funktion, insbesondere einer Objekterkennungs- oder einer Segmentierungs-Funktion.

Außerdem betrifft die Erfindung Computerprogrammprodukt zum Ausführen des vorgenannten Verfahrens.

Des Weiteren betrifft die Erfindung eine Verwendung der vorgenannten Trainings-Bilddaten zum Trainieren einer Funktion und eine Verwendung der trainierten Funktion zur Kontrolle der Richtigkeit der Bestückung von Flachbaugruppen bei Flachbaugruppenproduktion, beispielsweise zur Überprüfung, ob alle in einem vorgegebenen Prozessschritt vorgesehenen elektronische Bauelemente vorhanden und an den richtigen Plätzen angebracht sind.

Verfahren und Systeme der eingangs genannten Art sind im Stand der Technik bekannt.

Maschinelle Lernverfahren, insbesondere Künstliche Neuronale Netze (KNN), stellen in der Bildverarbeitung ein gigantisches Potenzial für eine Verbesserung der Leistungsfähigkeit und Robustheit bei gleichzeitiger Verringerung des Einrichtungs- und Pflegeaufwands dar. Insbesondere kommen hierbei Faltende Neuronale Netze (Convolutional Neural Networks - CNN) zum Einsatz. Einsatzgebiete umfassen die Bildklassifikation (z.B. für eine gut/schlecht Prüfung), die Objekterkennung, die Poseschätzung sowie die Segmentierung.

Grundlage aller maschinellen Lernverfahren, insbesondere KNNs und CNNs, ist eine selbstständige, auf Daten basierende, Optimierung des Programms, im Gegensatz zur expliziten Regelvergabe der klassischen Programmierung. Insbesondere bei CNNs kommen dabei größtenteils überwachte Lernverfahren zum Einsatz. Diese sind dadurch gekennzeichnet, dass für das Training sowohl beispielhafte Daten als auch das zugehörige richtige Ergebnis, das sogenannte Label, benötigt werden.

Für das Training von CNNs werden sehr viele Datensätze, z.B. 2D- und/oder 3D-Bilder, mit entsprechendem Label benötigt. Die Erstellung des Labels erfolgt dabei klassischerweise manuell. Während dies bei der Klassifizierung (z.B. gut/ schlecht) wenig Zeit erfordert, ist dies bei der Objekterkennung, der Poseschätzung sowie der Segmentierung zunehmend aufwändig. Dies stellt einen substantiellen Aufwand beim Einsatz KI-basierter Bildverarbeitungslösungen dar. Es fehlt daher eine Methode, dieses Labeling für derartige Verfahren (insb. Objekterkennung, auf Poseschätzung oder Segmentierung übertragbar) zu automatisieren.

Die Beschaffung korrekter Trainingsdaten stellt beim Einsatz KI-basierter Verfahren einen, wenn nicht den größten, Aufwandsfaktor dar.

Es gibt bestehende Ansätze, die benötigten Trainingsdaten synthetisch, anhand eines Digitalen Zwillings, zu erzeugen, da hier eine automatisierte Ausleitung des Labels relativ kostengünstig ist, und beliebig viele Daten erzeugt werden können (siehe auch EP Anmeldung der Anmelderin 20176860.3). Problematisch hierbei ist, dass die synthetischen Daten klassischerweise nicht alle realen optischen Eigenschaften und Einflüsse (z.B. Reflexionen, natürliche Beleuchtung, etc.) abbilden können, oder aber extrem rechenintensiv sind (vgl. https://arxiv.org/pdf/1902.03334.pdf; hier wurden 400 Rechencluster mit jeweils 16-Kern CPU mit 112 GB RAM verwendet). Derartig trainierte Netze sind daher zwar grundlegend funktionsfähig, jedoch in der Realität meist nicht vollständig robust (80%-Lösung). Daher ist weiterhin meist ein Nachtraining mit realen, gelabelten Daten notwendig, um eine für den industriellen Einsatz notwendigen Leistungsfähigkeit zu erreichen.

Einen weiteren Ansatz stellt die sogenannte "Data Augmentation" dar. Hierbei wird der ursprüngliche gelabelte Datensatz durch Bildverarbeitungsoperationen derart verändert, dass das resultierende Bild für den Algorithmus anders aussieht, jedoch weiterhin das Label des Ursprungsbilds unverändert genutzt werden kann, oder zumindest direkt umgerechnet werden kann. Das Data Augmentation setzt allerdings eine Veränderung, beispielsweise eine Umrechnung des ursprünglichen Labels, z.B. durch eine Translation (Verschiebung) und/oder Skalierung, da das Objekt samt dem Label auf einem "augmentierten" Bild typischerweise nicht an der gleichen Stelle verbleibt. Bei bestimmten Anwendungsfällen ist dieses Verfahren allerdings fehleranfällig.

ISOGAWA MARIKO ET AL: "Which is the Better Inpainted Image?Training Data Generation Without Any Manual Operations",INTERNATIONAL JOURNAL OF COMPUTER VISION, KLUWER ACADEMIC PUBLISHERS, NORWELL, US, Bd. 127, Nr. 11-12, 26. November 2018 (2018-11-26), Seiten 1751-1766, XP036918184,ISSN: 0920-5691, DOI: 10.1007/S11263-018-1132-0 [gefunden am 2018-11-26] offenbart ein Inpainting-Verfahren zur Erstellung von Trainingsdaten.

YUQIAN ZHOU ET AL: "TransFill: Reference-guided Image Inpainting by Merging Multiple Color and Spatial Transformations",ARXIV.ORG, CORNELL UNIVERSITY LIBRARY, 201 OLIN LIBRARY CORNELL UNIVERSITY ITHACA, NY 14853, 29. März 2021 (2021-03-29), XP081918996, offenbart ein Inpainting-Verfahren, bei dem andere Bilder für das Inpainting genutzt werden.

Die Aufgabe der vorliegenden Erfindung kann somit darin gesehen werden, Verfahren und Systeme zum Erzeugen von Trainings-Bilddaten zu verbessern.

Die Aufgabe wird mit einem eingangs genannten Verfahren erfindungsgemäß durch die angehängten Ansprüche gelöst.

Eine nicht beanspruchte Ausführungsform umfasst:
S1 Bereitstellen zumindest eines annotierten Bildes, wobei das annotierte Bild zumindest ein, vorzugsweise zu erkennendes Objekt mit einer dem zumindest einem Objekt zugeordneten Annotation (Label) aufweist, wobei die Annotation einen Bildbereich (Bereich des Bildes) beschreibt oder definiert, in dem das zumindest eine Objekt enthalten ist,
S2 Auswählen eines Objektes in dem annotierten Bild,
S3 Entfernen des durch die Annotation beschriebenen Bildbereichs, um das ausgewählte Objekt samt der dem ausgewählten Objekt zugeordneten Annotation aus dem annotierten Bild zu entfernen und dadurch ein modifiziertes annotiertes Bild zu erzeugen,
S4 Bereitstellen der das modifizierte annotierte Bild enthaltenden Trainings-Bilddaten.

Es ist zu verstehen, dass das modifizierte annotierte Bild zu den Trainings-Bilddaten, die das annotierte Bild bereit enthalten, hinzugefügt wird, bevor die Trainings-Bilddaten bereitgestellt werden.

Dadurch werden (reale, nicht synthetische) Trainings-Bilddaten erzeugt, bei welchen jedes Label entweder vorhanden ist oder nicht. Im Gegensatz zu herkömmlichen Verfahren wird dabei nicht nur ein gelabeltes Bild optisch verändert (Data Augmentation), sondern insbesondere auch das Vorhandensein einzelner zu detektierender, vorzugsweise sich nicht überlappender Objekte gezielt beeinflusst. Somit wird auch der relevante Inhalt des Datensatzes (der Trainings-Bilddaten) angepasst, wodurch wiederum eine Erhöhung der Heterogenität des Eingangsdatensatzes ohne die zusätzliche Aufnahme und Labeling weiterer Bilder erzielt werden kann. Data Augmentation ist in diesem Sinne rein optisches Verfahren, das keinen Einfluss auf den Inhalt der Trainings-Bilddaten hat. Insbesondere wird die Anzahl der Objekte im Bild bei Data Augmentation nicht geändert. Genannt sei z.B. Erkennung von Bauteilen und Ermittlung deren Position auf einer Flachbaugruppe. Anhand der Trainings-Bilddaten, die gemäß dem Verfahren aus der vorliegenden Offenbarung erzeugt werden, kann beispielsweise durch einen Stücklistenabgleich die korrekte Bestückung einer Leiterplatte ermittelt werden. Ein anderes Beispiel ist die Erkennung von guten/schlechten Flachbaugruppen, bei welcher als Basis für die Beurteilung, die Beurteilung der Lötstellen (gut/schlecht) herangezogen wird. Die Anwendung der vorliegenden Offenbarung ist allerdings nicht auf die genannten Beispiele beschränkt.

Bei einer nicht beanspruchten Ausführungsform kann es vorgesehen sein, dass die Annotation / das Label eine Umrandung des Objektes enthält. Vorzugsweise ist die Umrandung als Rechteck ausgebildet und ist derart optimal, dass sie den kleinstmöglichen Bildbereich abgrenzt, in dem das umrandete Objekt noch enthalten sein kann. Das bedeutet, dass bei einer kleineren Umrandung das Objekt nicht vollständig in dem durch die kleinere Umrandung abgegrenzten Bildbereich enthalten sein wird.

Bei einer nicht beanspruchten Ausführungsform kann es vorgesehen sein, dass das annotierte Bild einen Hintergrund aufweist.

Bei einer nicht beanspruchten Ausführungsform kann es vorgesehen sein, dass zusätzlich mindestens ein Bild, in dem keine Objekte enthalten sind (zum Beispiel eine leere (unbestückte) Leiterplatte), den Trainings-Bilddaten hinzugefügt wird. Mit anderen Worten kann es zweckmäßig sein, ein zusätzliches Bild derselben Szene (desselben Hintergrunds) ohne Objekte aufzunehmen.

Bei einer nicht beanspruchten Ausführungsform kann es vorgesehen sein, dass die Auswahl des zumindest einen Objektes anhand der diesem Objekt zugeordneten Annotation (des Labels) erfolgt. Bei einer Ausführungsform kann es vorgesehen sein, dass das Auswählen automatisch erfolgt.

Bei einer nicht beanspruchten Ausführungsform kann es vorgesehen sein, dass das Label (die Annotation) eines jeden Objekts im Bild Informationen über Identifikation (Typ, Beschreibung, Art) des Objektes und/oder seine Position auf dem Bild enthält.

Bei einer nicht beanspruchten Ausführungsform kann es vorgesehen sein, dass der Hintergrund ein digitales Abbild einer Leiterplatte aufweist.

Bei einer nicht beanspruchten Ausführungsform kann es vorgesehen sein, dass annotierte Bild eine Vielzahl von Objekten umfasst.

Bei einer nicht beanspruchten Ausführungsform kann es vorgesehen sein, dass die Objekte unterschiedlich sind.

Jedes Objekt kann Teil-Objekte aufweisen, die zu einer Gesamtheit - zu einem Objekt - zusammengefasst werden können. Die Teil-Objekte können voneinander baulich getrennt ausgebildet sein. Alternativ können ein oder mehrere Objekte als ein baulich einheitliches Teil ausgebildet sein.

Bei einer nicht beanspruchten Ausführungsform kann es vorgesehen sein, dass die das zumindest eine Objekt als ein digitales Abbild eines elektronischen Bauelements zum Bestücken einer Leiterplatte bzw. eines elektronischen Bauelements einer Flachbaugruppe ausgebildet ist.

Bei einer nicht beanspruchten Ausführungsform kann es vorgesehen sein, dass die Schritte S2 und S3 so lange wiederholt werden, bis das modifizierte annotierte Bild keine Objekte mehr aufweist (also z.B. nur den Hintergrund), um mehrere unterschiedliche modifizierte annotierte Bilder zu erzeugen, wobei die unterschiedlichen modifizierten annotierten Bilder den Trainings-Bilddaten hinzugefügt werden.

Bei einer nicht beanspruchten Ausführungsform kann es vorgesehen sein, dass das annotierte und das modifizierte annotierte Bild weiterverarbeitet werden, um weitere annotierte Bilder zu erzeugen, wobei die weiteren annotierten Bilder den Trainings-Bilddaten hinzugefügt werden.

Bei einer nicht beanspruchten Ausführungsform kann es vorgesehen sein, dass das Entfernen des durch die Annotation beschriebenen Bildbereichs ein Überschreiben des Bildbereichs umfasst.

Bei einer nicht beanspruchten Ausführungsform kann es vorgesehen sein, dass zum Überschreiben des Bildbereichs das vorgenannte Bild ohne darin enthaltenen Objekte verwendet wird.

Bei einer nicht beanspruchten Ausführungsform kann es vorgesehen sein, dass zum Überschreiben eine, vorzugsweise genau eine Farbe, ein Zufallsmuster oder ein Bereich eines anderen Bildes, beispielsweise eines Hintergrundbildes verwendet wird.

Bei einer nicht beanspruchten Ausführungsform kann es vorgesehen sein, dass der Bereich des anderen Bildes dem Bildbereich korrespondiert, insbesondere die gleiche Größe und/oder die Position hat.

Bei einer nicht beanspruchten Ausführungsform kann es also vorgesehen sein, dass der durch die Annotation beschriebene Bildbereich (und das zumindest eine darin enthaltene Objekt) durch den entsprechenden Bildbereich der weiteren Szene (des anderen Bildes), beispielsweise einer leeren Aufnahme (d.h. Hintergrund ohne Objekte) ersetzt, vorzugsweise überschrieben werden. Hierdurch wird der relevante vom Objekt belegte Bildbereich durch den beispielsweise leeren Bildbereich überschrieben. Der neu erzeugte Datensatz in Form eines modifizierten annotierten Bildes enthält somit das eine entsprechende Objekt nicht mehr (gegebenenfalls vorhandene weitere Objekte allerdings schon).

Bei einer nicht beanspruchten Ausführungsform kann es vorgesehen sein, dass das andere Bild das annotierte Bild das zumindest eine Objekt nicht enthält. Beispielsweise kann das andere Bild den gleichen Hintergrund wie das annotierte Bild beispielsweise nur den Hintergrund im annotierten Bild - also ohne das/die Objekt/e - aufweisen.

Bei einer nicht beanspruchten Ausführungsform kann es vorgesehen sein, dass die Annotation Informationen über Größe und Position des zumindest einen Objektes in dem annotierten Bild und/oder eine Segmentierung, d.h. Information über alle dem Objekt zugehörigen Pixel in dem annotierten Bild, enthält.

Die Aufgabe wird auch mit einem eingangs genannten nicht beanspruchten System dadurch gelöst, dass das System eine erste Schnittstelle, eine zweite Schnittstelle und eine Recheneinrichtung umfasst, wobei
- die erste Schnittstelle dazu konfiguriert ist, zumindest ein annotiertes Bild zu empfangen, wobei das annotierte Bild zumindest ein Objekt mit einer dem zumindest einem Objekt zugeordneten Annotation (Label) aufweist, wobei die Annotation einen Bildbereich (Bereich des Bildes) beschreibt oder definiert, in dem das zumindest eine Objekt enthalten ist,
- die Recheneinrichtung dazu konfiguriert ist, ein Objekt in dem annotierten Bild auszuwählen, und den durch die Annotation beschriebenen Bildbereich zu entfernen, um das ausgewählte Objekt samt der dem ausgewählten Objekt zugeordneten Annotation aus dem annotierten Bild zu entfernen und dadurch ein modifiziertes annotiertes Bild zu erzeugen, (und das modifizierte annotierte Bild den Trainings-Bilddaten hinzuzufügen)
- die zweite Schnittstelle dazu konfiguriert ist, die das modifizierte annotierte Bild (MAB) enthaltenden Trainings-Bilddaten bereitzustellen.

Darüber hinaus wird die Aufgabe mit einer nicht beanspruchten Verwendung der Trainings-Bilddaten, die nach dem vorgenannten Verfahren bereitgestellt werden, zum Trainieren einer Funktion gelöst.

Mit anderen Worten wird die Aufgabe mit einem nicht beanspruchten Verfahren zum Trainieren einer Funktion dadurch gelöst, dass eine (z.B. untrainierte oder vortrainierte) Funktion mit Trainings-Bilddaten trainiert wird, wobei die Trainings-Bilddaten nach dem vorgenannten Verfahren bereitgestellt werden.

Obendrein wird die Aufgabe mit einer nicht beanspruchten Verwendung einer trainierten Funktion zur Kontrolle der Richtigkeit der Bestückung von Flachbaugruppen bei Flachbaugruppenproduktion, wobei die Funktion wie vorgenannt beschrieben trainiert wird, gelöst.

Mit anderen Worten wird die Aufgabe mit einem Verfahren zur Kontrolle der Richtigkeit der Bestückung von Flachbaugruppen bei Flachbaugruppenproduktion dadurch gelöst, dass die Richtigkeit der Bestückung von Flachbaugruppen bei Flachbaugruppenproduktion durch (oder mittels) eine(r) trainierte(n) Funktion überprüft wird, wobei die Funktion mit Trainings-Bilddaten trainiert wird, wobei die Trainings-Bilddaten nach dem vorgenannten Verfahren bereitgestellt werden. Dabei wird zumindest ein Bild von einer vorzugsweise nach einem bestimmten Prozessschritt eines Prozesses (Flachbaugruppenfertigungsprozesses) hergestellten Flachbaugruppe bereitgestellt, beispielsweise mittels einer Kamera aufgenommen. Das zumindest eine Bild wird anschließend mit der trainierten Funktion überprüft, die beispielsweise auf einer Recheneinheit gespeichert sein kann.

Die Erfindung samt weiteren Vorteilen ist im Folgenden anhand beispielhafter Ausführungsformen näher erläutert, die in der Zeichnung veranschaulicht sind. In dieser zeigt
- FIG 1: ein Ablaufdiagramm eines computerimplementierten Verfahrens,
- FIG 2: mögliche Zwischenergebnisse der Verfahrensschritte des Verfahrens gemäß FIG 1,
- FIG 3: ein System zum Erzeugen und Bereitstellen von Trainings-Bilddaten,
- FIG 4: ein System zum Trainieren einer Objekterkennungs-Funktion, und
- FIG 5: ein System zur Kontrolle der Richtigkeit der Bestückung von Flachbaugruppen bei Flachbaugruppenproduktion.

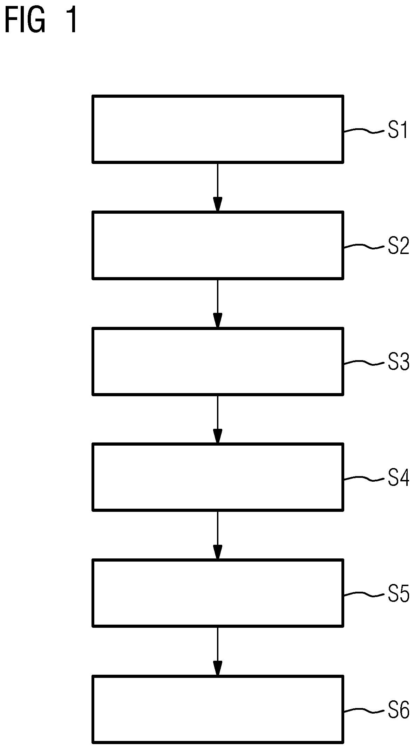

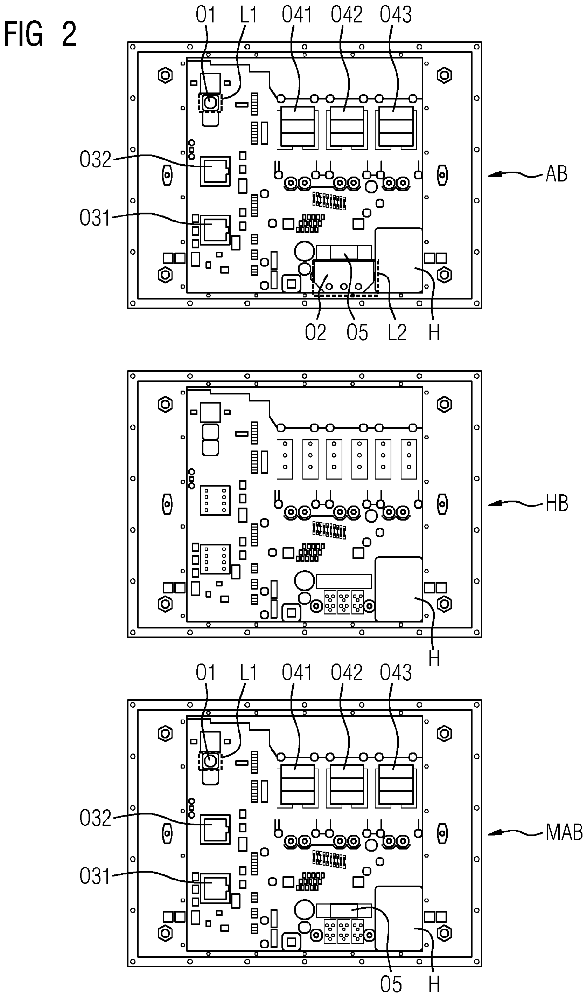

Zunächst wird auf FIG 1 und FIG 2 Bezug genommen. FIG 1 zeigt ein Ablaufdiagramm eines computerimplementierten Verfahrens. FIG 2 veranschaulicht mögliche Zwischenergebnisse der Verfahrensschritte des Verfahrens gemäß FIG 1.

In einem Schritt S1 wird ein annotiertes Bild AB (siehe FIG 2) bereitgestellt.

In dem annotierten Bild AB sind mehrere Objekte O1, O2, O31, O32, 041, O42, O43, O5 zu erkennen, die unterschiedlich sein können. Die Objekte O1, O2, 031, O32, 041, O42, O43, O5 sind beispielhaft als elektronische Bauelemente bzw. als ihre digitalen Abbilder ausgebildet.

Den Objekten O1 und O2 ist je ein Label bzw. eine Annotation L1, L2 zugeordnet, wobei einem ersten Objekt O1 ein erstes Label L1 und einem zweiten Objekt O2 ein zweites Label L2 zugeordnet ist.

Die Label L1, L2 definieren einen Bereich des Bildes AB, in dem das entsprechende Objekt O1, O2 enthalten, vorzugsweise vollständig enthalten ist. Die Label L1, L2 können **z.B.** Angaben zu Höhen und Breiten entsprechender Bildbereiche enthalten, sodass die dazugehörigen Objekte O1, O2 in den Bereichen enthalten sind.

Die Label L1, L2 können graphisch als eine Umrandung der entsprechenden Objekte O1, O2 ausgebildet sein. Vorzugsweise ist die Umrandung L1, L2 als Rechteck ausgebildet und ist derart optimal, dass sie den kleinstmöglichen Bildbereich abgrenzt, in dem das umrandete Objekt O1, O2 noch enthalten sein kann. Das bedeutet, dass bei einer kleineren Umrandung das Objekt O1, O2 nicht vollständig in dem durch die kleinere Umrandung abgegrenzten Bildbereich enthalten sein wird.

FIG 2 lässt außerdem erkennen, dass das annotierte Bild AB einen Hintergrund H aufweist. Der Hintergrund H weist beispielsweise eine Leiterplatte bzw. ihr digitales Abbild auf. Das Bild AB ist somit eine Aufnahme einer (teilweise bestückten) Flachbaugruppe.

In einem Schritt S2 wird zumindest ein Objekt in dem annotierten Bild AB ausgewählt. Das kann beispielsweise das zweite Objekt O2 sein.

In einem Schritt S3 wird das ausgewählte Objekt O2 und sein Label L2 aus dem annotierten Bild AB entfernt, indem der durch das Label L2 definierte Bildbereich entfernt, **z.B.** überschrieben wird. Dadurch wird ein modifiziertes annotiertes Bild MAB erzeugt.

Das zweite Objekt O2 ist in dem modifizierten Bild MAB nicht mehr vorhanden. Das zweite Label L2 ist in der (Gesamt- )Annotation des modifizierten annotierten Bildes MAB ist nicht vorhanden.

Auf diese Weise kann eine Vielzahl modifizierter Bilder MAB erzeugt werden, die (beispielsweise zusammen mit dem annotierten Bild AB) als Trainings-Bilddaten bereitgestellt werden - Schritt S4.

FIG 2 lässt außerdem ein weiteres Bild HB erkennen. In dem Bild HB ist eine (teilweise) unbestückte Leiterplatte erkennbar, auf der keiner der (zu erkennenden) Objekte O1, O2, O31, O32, 041, O42, O43, O5 abgebildet sind.

Ein solches Bild HB kann hilfsweise bereitgestellt werden.

Das Entfernen des durch das Label L2 definierten Bildbereichs in Schritt S3 kann dadurch erfolgen, dass dieser Bildbereich überschrieben wird.

Zum Überschreiben des Bildbereichs kann beispielsweise eine, vorzugsweise genau eine Farbe, ein Zufallsmuster oder ein Bereich eines anderen Bildes, beispielsweise eines Hintergrundbildes HB verwendet werden.

Zweckdienlich kann es sein, dass der Bereich des Hintergrundbildes HB, mit dem der durch das Label L2 definierte Bildbereich überschrieben wird, und der zu überschreibende Bereich selbst einander korrespondieren, insbesondere gleiche Größe und/oder Position aufweisen.

Das modifizierte Bild MAB ist beispielsweise durch ein solches Überschreiben entstanden. Ein solches modifiziertes Bild MAB ist sehr realitätstreu und verbessert die Qualität und die Genauigkeit einer Funktion, wenn sie mit Bildern solcher Art trainiert wird.

Das annotierte Bild AB und das/die modifizierte/n annotierte/n Bilder können weiterverarbeitet, um weitere Bilder für die Trainings-Bilddaten zu erzeugen. Hierzu kann eine Falschfarbendarstellung und/oder verschiedene Graustufen verwendet werden, beispielsweise um unterschiedlichen Beleuchtungsszenarien während der Produktion Rechnung zu tragen. Außerdem kann Beleuchtung, Farbsättigung u.Ä. variiert werden. Es versteht sich, dass die Variation der Beleuchtung, Farbsättigung usw. auch beim Erzeugen, z.B. beim Aufnehmen des annotierten Bildes AB und/oder bei der Weiterverarbeitung des annotierten Bildes AB und des/der modifizierten annotierten Bildes(r) erfolgen kann. Z.B. kann das Hintergrundbild HB in einem ersten Farbton und das Annotierte Bild AB in einem zweiten Farbton erzeugt werden, wobei der erste Farbton sich von dem zweiten Farbton unterscheidet.

Durch Wiederholung der Schritte S2 und S3 können schnell große Trainings-Daten-Bildsätze erzeugt werden.

Bei n Objekten können z.B. 2ⁿ⁺¹ eindeutige Variationen des Vorhandenseins der Objekte erzeugt werden. Am Beispiel einer Leiterplatte, auf der beispielsweise 52 elektronische Bauteile vorhanden sind, können rechnerisch aus einem Bild 2⁵³ also ca. 9 x 10¹⁵ unterschiedliche Bilder für das Training, erstellt werden.

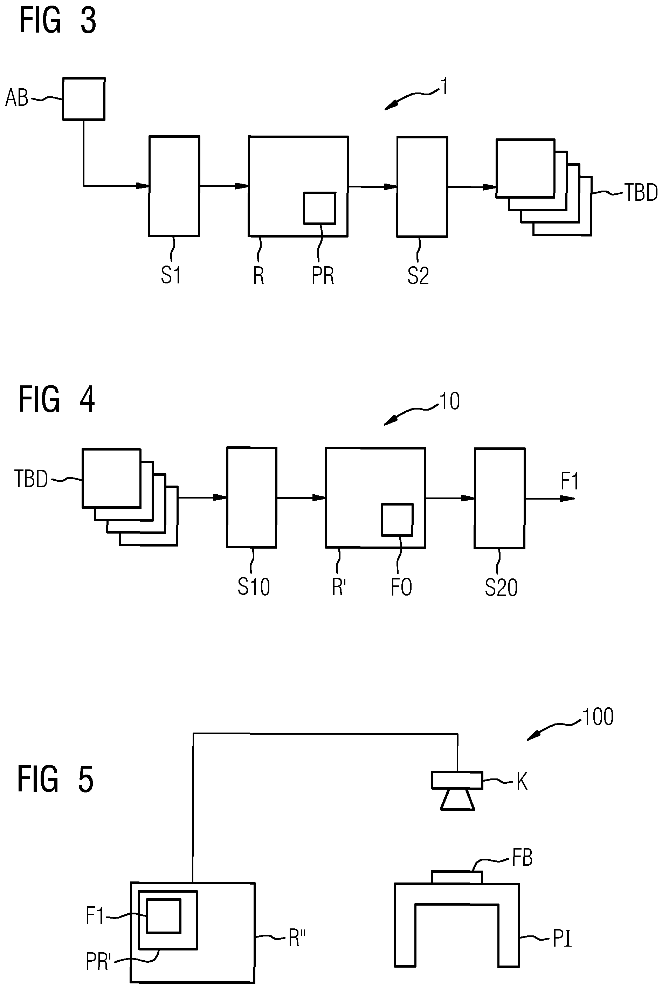

FIG 3 zeigt ein System 1 zum Erzeugen, beispielsweise gemäß dem oben beschriebenen Verfahren, und Bereitstellen von Trainings-Bilddaten TBD. Das System 1 umfasst eine erste Schnittstelle S1, eine zweite Schnittstelle S2 und eine Recheneinrichtung R. Die erste Schnittstelle S1 ist dazu konfiguriert, das annotierte Bild AB zu empfangen. Die Recheneinrichtung R ist dazu konfiguriert, ein Objekt O1, O2 in dem annotierten Bild AB auszuwählen, und den durch die Annotation L1, L2 beschriebenen Bildbereich des annotierten Bildes AB zu entfernen. Dadurch wird das ausgewählte Objekt O1, O2 samt der dem ausgewählten Objekt O1, O2 zugeordneten Annotation L1, L2 aus dem annotierten Bild AB entfernt und dadurch ein modifiziertes annotiertes Bild MAB erzeugt. Hierzu kann die Recheneinrichtung R ein Computerprogramm PR aufweisen, das Befehle umfasst, die bei der Ausführung des Computerprogramms PR durch die Recheneinrichtung R diese veranlassen, die die Trainings-Bilddaten TBD zu erzeugen. Die Recheneinrichtung R kann sodann das modifizierte annotierte Bild MAB und das annotierte Bild AB den Trainings-Bilddaten TBD. Die zweite Schnittstelle S2 ist dazu konfiguriert, die Trainings-Bilddaten TBD bereitzustellen.

Die Trainings-Bilddaten TBD können zum Trainieren einer Funktion, insbesondere einer Objekterkennungs-Funktion F0 verwendet werden. FIG 4 zeigt ein System 10 zum Trainieren der Objekterkennungs-Funktion F0. Das System 10 weist ebenfalls eine erste Schnittstelle S10, eine zweite Schnittstelle S20 und eine Recheneinrichtung R'. Die erste Schnittstelle S10 ist dazu konfiguriert, die Trainings-Bilddaten TBD zu empfangen. Die Recheneinrichtung R' ist dazu konfiguriert, eine beispielsweise auf der Recheneinrichtung R' gespeicherte oder der Recheneinrichtung R' vor dem Training bereitgestellte untrainierte oder vortrainierte Objekterkennungs-Funktion F0 mit den Trainings-Bilddaten TBD zu trainieren und eine trainierte Objekterkennungs-Funktion F1 zu erzeugen. Die zweite Schnittstelle S20 ist dazu konfiguriert, die Objekterkennungs-Funktion F1 bereitzustellen.

Eine solche Objekterkennungs-Funktion F1 kann beispielsweise zur Kontrolle der Richtigkeit der Bestückung von Flachbaugruppen bei Flachbaugruppenproduktion. FIG 5 zeigt ein schematisch ein System 100, welches dabei eingesetzt werden kann. Das System 100 weist eine Recheneinrichtung R". An die Recheneinrichtung R" ist eine Kamera K angeschlossen, die eingerichtet ist, nach einem bestimmten Prozessschritt eines Prozesses hergestellte Flachbaugruppen FB an einer Produktionsinsel PI zu erfassen und die erfassten Aufnahmen zur Analyse an die Recheneinrichtung R" zu senden. Um die Aufnahmen zu analysieren und beispielsweise die Bestückung der Flachbaugruppen FB hinsichtlich der Vollständigkeit zu prüfen, umfasst die Recheneinrichtung ein Computerprogramm PR', welches ausgebildet ist, die Aufnahmen mittels der trainierten Objekterkennungs-Funktion F1 zu analysieren. Ergebnis einer solchen Analyse kann sein, dass es elektronische Bauteile auf einer Flachbaugruppe FB fehlen, sodass eine entsprechende Meldung an den Benutzer ausgegeben wird.

Die Recheneinrichtungen R, R' und R" können in etwa den gleichen Aufbau aufweisen. Beide können beispielsweise einen Prozessor und einen flüchtigen oder nicht-flüchtigen Speicher aufweisen, wobei der Prozessor operativ mit dem Speicher gekoppelt ist. Der Prozessor ist vorgesehen, um entsprechende in Form eines Codes auf dem Speicher vorliegende Befehle abzuarbeiten, um z.B. Trainings-Bilddaten TBD zu erzeugen, die (untrainierte oder vortrainierte) Objekterkennungs-Funktion F0 zu trainieren oder die trainierte Objekterkennungs-Funktion F1 auszuführen.

Die Aufgabe dieser Beschreibung besteht lediglich darin, veranschaulichende Beispiele bereitzustellen und weitere Vorteile und Besonderheiten dieser Erfindung anzugeben.

Darüber hinaus kann der Gegenstand dieser Offenbarung auf verschiedenen Gebieten außer der Bestückungskontrolle der Flachbaugruppen zum Einsatz kommen. So können Trainings-Bilddaten wie oben beschrieben zum Trainieren von Objekterkennungs-Funktionen für Systeme erzeugt werden, die beispielsweise im Bereich des autonomen Fahrens eingesetzt werden. Dabei geht man von einem annotierten Bild aus, auf dem eine Landschaft mit einer Fahrbahn und einem oder mehreren in der Landschaft angeordneten Objekten zu sehen ist. Den Objekten sind Labels zugeordnet. Mit diesem annotierten Bild als Ausgangspunkt kann das oben beschriebene Verfahren durchgeführt werden, um entsprechende Trainings-Bilddaten zu erzeugen. Anschließend kann mit diesen Trainings-Bilddaten eine Objekterkennungs-Funktion für das autonome Fahren trainiert werden.

In den Ausführungsbeispielen und Figuren können gleiche oder gleich wirkende Elemente jeweils mit den gleichen Bezugszeichen versehen sein. Die Bezugszeichen, insbesondere in den Ansprüchen, sind lediglich zur Vereinfachung der Findung der mit den Bezugszeichen versehenen Elemente vorgesehen und haben keine einschränkende Wirkung auf den unter den Schutz gestellten Gegenstand inne.

## Patentansprüche

1. Computerimplementiertes Verfahren zum Bereitstellen von Trainings-Bilddaten (TBD) zum Trainieren einer Objekterkennungs-Funktion (F0), wobei das Verfahren folgende Schritte umfasst:
S1 Bereitstellen zumindest eines annotierten Bildes (AB), wobei das annotierte Bild (AB) eine Vielzahl von zu erkennenden elektronischen Bauelementen (O1, O2, 031, O32, 041, O42, O43, O5) auf einem als eine Leiterplatte ausgebildeten Hintergrund mit den zu erkennenden elektronischen Bauelementen zugeordneten Annotationen (L1, L2) aufweist, wobei jede Annotation einen Bildbereich beschreibt, in dem das entsprechende zu erkennende elektronische Bauelement (O1, O2, 031, O32, 041, O42, O43, O5) enthalten ist, und
eines weiteren Bildes (HB), in dem keine zu erkennende elektronische Bauelemente (O1, O2, 031, O32, 041, O42, O43, O5) enthalten sind,
S2 Auswählen eines zu erkennenden elektronischen Bauelements (O1, O2, 031, O32, 041, O42, O43, O5) in dem annotierten Bild (AB),
S3 Ersetzen des durch die Annotation (L1, L2) beschriebenen Bildbereichs durch Überschreiben dieses Bildbereichs durch einen diesem Bildbereich korrespondierenden Bereich des weiteren Bildes (HB), um das elektronische Bauelement (O1, O2, 031, O32, O41, O42, O43, O5) samt der dem ausgewählten elektronischen Bauelement (O1, O2, 031, O32, O41, O42, O43, O5) zugeordneten Annotation (L1, L2) aus dem annotierten Bild (AB) zu entfernen und ein modifiziertes annotiertes Bild (MAB) zu erzeugen, wobei, um mehrere unterschiedliche modifizierte annotierte Bilder zu erzeugen, die Schritte S2 und S3 so lange wiederholt werden, bis das modifizierte annotierte Bild (MAB) keine zu erkennende elektronische Bauelemente (O1, O2, 031, O32, 041, O42, O43, O5) mehr aufweist, wobei die unterschiedlichen modifizierten annotierten Bilder den Trainings-Bilddaten (TBD) hinzugefügt werden,
S4 Bereitstellen der das modifizierte annotierte Bild (MAB) enthaltenden Trainings-Bilddaten (TBD).

2. Verfahren nach Anspruch 1, wobei die zu erkennenden elektronischen Bauelemente (O1, O2, 031, O32, 041, O42, O43, O5) unterschiedlich sind.

3. Verfahren nach einem der Ansprüche 1 oder 2, wobei das annotierte Bild (AB) und das modifizierte annotierte Bild (MAB) weiterverarbeitet werden, um weitere annotierte Bilder zu erzeugen, wobei die weiteren annotierten Bilder den Trainings-Bilddaten (TBD) hinzugefügt werden.

4. Verfahren nach einem der Ansprüche 1 bis 3, wobei der Bereich des weiteren Bildes (HB) die gleiche Größe und/oder die Position hat wie der durch die Annotation (L1, L2) beschriebene Bildbereich des annotierten Bilds (AB).

5. Verfahren nach einem der Ansprüche 1 bis 4, wobei die Annotation (L1, L2) Informationen über Größe und Position des zumindest einen zu erkennenden elektronischen Bauelementes in dem annotierten Bild (AB) und/oder über alle dem zu erkennenden elektronischen Bauelement zugehörigen Pixel in dem annotierten Bild (AB) enthält.

6. Verfahren nach einem der Ansprüche 1 bis 5, wobei die Annotation (L1, L2) eine Umrandung des zu erkennenden elektronischen Bauelementes (O1, O2, 031, O32, 041, O42, O43, O5) enthält.

7. Verfahren nach Anspruch 6, wobei die Umrandung als Rechteck ausgebildet und derart optimal ist, dass sie den kleinstmöglichen Bildbereich abgrenzt, in dem das umrandete zu erkennende elektronische Bauelement (O1, O2, 031, O32, 041, O42, O43, O5) noch enthalten sein kann.

8. Verfahren nach einem der Ansprüche 1 bis 7, wobei das Auswählen eines zu erkennende elektronischen Bauelementes (O1, O2, 031, O32, 041, O42, O43, O5) in dem annotierten Bild (AB) anhand der diesem zu erkennenden elektronischen Bauelement zugeordneten Annotation (L1, L2) erfolgt.

9. Verfahren nach einem der Ansprüche 1 bis 8, wobei die Annotation (L1, L2) jedes zu erkennenden elektronischen Bauelements (O1, O2, 031, O32, 041, O42, O43, O5) in dem annotierten Bild (AB) Informationen über Identifikation, beispielsweise Typ, Beschreibung, Art, des zu erkennenden elektronischen Bauelementes (O1, O2, 031, O32, 041, O42, O43, O5) und/oder seine Position auf dem Bild (AB) und/oder eine Segmentierung, d.h. Information über alle dem zu erkenndenden elektronischen Bauelement (O1, O2, 031, O32, 041, O42, O43, O5) zugehörigen Pixel in dem annotierten Bild (AB), enthält.

10. Verfahren nach einem der Ansprüche 1 bis 9, wobei jedes zu erkennende elektronische Bauelement (O1, O2, 031, O32, 041, O42, O43, O5) Teil-Objekte aufweist.

11. System zum Erzeugen und Bereitstellen von Trainings-Bilddaten (TBD) zum Trainieren einer Objekterkennungs-Funktion (F0), wobei das System (1) eine erste Schnittstelle (S1), eine zweite Schnittstelle (S2) und eine Recheneinrichtung (R) umfasst, wobei
- die erste Schnittstelle (S1) dazu konfiguriert ist, zumindest ein annotiertes Bild (AB) und ein weiteres Bild (HB) zu empfangen, wobei
das annotierte Bild (AB) eine Vielzahl von zu erkennenden elektronischen Bauelementen (O1, O2, 031, O32, 041, O42, O43, O5) auf einem als eine Leiterplatte ausgebildeten Hintergrund (H) mit den zu erkennenden elektronischen Bauelementen zugeordneten Annotationen (L1, L2) aufweist, wobei jede Annotation (L1, L2) einen Bildbereich definiert, in dem das zumindest eine zu erkennende elektronische Bauelement (O1, O2, 031, O32, 041, O42, O43, O5) enthalten ist, und
in dem weiteren Bild (HB) keine zu erkennende elektronische Bauelemente (O1, O2, 031, O32, 041, O42, O43, O5) enthalten sind,
- die Recheneinrichtung (R) dazu konfiguriert ist,
ein zu erkennendes elektronisches Bauelement (O1, O2, 031, O32, 041, O42, O43, O5) in dem annotierten Bild (AB) auszuwählen,
den durch die Annotation (L1, L2) beschriebenen Bildbereich durch Überschreiben dieses Bildbereichs durch einen diesem Bildbereich korrespondierenden Bereich des weiteren Bildes (HB) zu ersetzen, um das ausgewählte elektronische Bauelement (O1, O2, 031, O32, 041, O42, O43, O5) samt der dem ausgewählten elektronischen Bauelement zugeordneten Annotation (L1, L2) aus dem annotierten Bild (AB) zu entfernen und ein modifiziertes annotiertes Bild (MAB) zu erzeugen,
um mehrere unterschiedliche modifizierte annotierte Bilder zu erzeugen, die Schritte S2 und S3 so lange zu wiederholen, bis das modifizierte annotierte Bild (MAB) keine zu erkennende elektronische Bauelemente (O1, O2, 031, O32, 041, O42, O43, O5) mehr aufweist, und die unterschiedlichen modifizierten annotierten Bilder den Trainings-Bilddaten (TBD) hinzuzufügen,
- die zweite Schnittstelle (S2) dazu konfiguriert ist, die das modifizierte annotierte Bild (MAB) enthaltenden Trainings-Bilddaten (TBD) bereitzustellen.

12. Computerprogrammprodukt, umfassend Befehle, die bei der Ausführung des Computerprogramms (PR) durch einen Computer diesen veranlassen, ein Verfahren nach einem der Ansprüche 1 bis 10 auszuführen.

13. Verfahren zum Trainieren einer Objekterkennungs-Funktion (F0, F1), wobei die Objekterkennungs-Funktion (F0, F1) mit Trainings-Bilddaten (TBD) trainiert wird, wobei die Trainings-Bilddaten (TBD) nach einem Verfahren nach einem der Ansprüche 1 bis 10 bereitgestellt werden.

14. Verfahren zur Kontrolle der Richtigkeit der Bestückung von Flachbaugruppen (FB) bei Flachbaugruppenproduktion, wobei
- zumindest ein Bild von einer vorzugsweise nach einem bestimmten Prozessschritt eines Prozesses hergestellten Flachbaugruppe (FB) bereitgestellt wird,
- das zumindest eine Bild mittels einer trainierten Funktion (F1) analysiert wird, um die Richtigkeit der Bestückung der Flachbaugruppe (FB) zu überprüfen, wobei die Funktion (F1) mit Trainings-Bilddaten (TBD) trainiert wurde, wobei die Trainings-Bilddaten (TBD) nach einem Verfahren nach einem der Ansprüche 1 bis 10 bereitgestellt wurden.

## Claims

1. Computer-implemented method for providing training image data (TBD) for training an object recognition function (F0), wherein the method comprises the following steps:
S1 Providing at least one annotated image (AB), wherein the annotated image (AB) has a multiplicity of electronic components to be detected (O1, O2, 031, O32, 041, O42, O43, O5) on a background designed as a printed circuit board with annotations (L1, L2) assigned to the electronic components to be detected, wherein each annotation (L1, L2) describes an image area in which the corresponding electronic component to be detected (O1, O2, 031, O32, 041, O42, O43, O5) is contained, and
a further image (HB), in which no electronic components to be detected (O1, O2, 031, O32, 041, O42, O43, O5) are contained,
S2 Selecting an electronic component to be detected (O1, O2, 031, O32, 041, O42, O43, O5) in the annotated image (AB),
S3 Replacing the image area described by the annotation (L1, L2) by overwriting said image area with an area of the further image (HB) that corresponds to said image area in order to remove the electronic component (O1, O2, 031, O32, 041, O42, O43, O5) together with the annotation (L1, L2) assigned to the selected electronic component (O1, O2, 031, O32, 041, O42, O43, O5) from the annotated image (AB) and produce a modified annotated image (MAB), wherein, in order to generate a plurality of different modified annotated images, the steps S2 and S3 are repeated until the modified annotated image (MAB) no longer has any more electronic components to be detected (O1, O2, 031, O32, 041, O42, O43, O5), wherein the different modified annotated images are added to the training image data (TBD),
S4 Providing the training image data (TBD) containing the modified annotated image (MAB).

2. Method according to claim 1, wherein the annotated electronic components to be detected (O1, O2, 031, O32, 041, O42, O43, O5) are different.

3. Method according to one of claims 1 or 2, wherein the annotated image (AB) and the modified annotated image (MAB) are processed to generate further annotated images, wherein the further annotated images are added to the training image data (TBD).

4. Method according to one of claims 1 to 3, wherein the area of the further image (HB) has the same size and/or position as the image area, described by the annotation (L1, L2), of the annotated image (AB).

5. Method according to one of claims 1 to 4, wherein the annotation (L1, L2) contains information about the size and position of the at least one electronic component to be detected in the annotated image (AB) and/or about all the pixels associated with the electronic component to be detected in the annotated image (AB).

6. Method according to one of claims 1 to 5, wherein the annotation (L1, L2) contains a border of the electronic component to be detected (O1, O2, 031, O32, 041, O42, O43, O5).

7. Method according to claim 6, wherein the border is designed as a rectangle and is optimal in such a way that it delimits the smallest possible image area in which the bordered electronic component to be detected (O1, O2, 031, O32, 041, O42, O43, O5) can still be contained.

8. Method according to one of claims 1 to 7, wherein the selection of an electronic component to be detected (O1, O2, 031, O32, 041, O42, O43, O5) in the annotated image (AB) takes place on the basis of the annotation (L1, L2) assigned to this electronic component to be detected.

9. Method according to one of claims 1 to 8, wherein the annotation (L1, L2) of each electronic component to be detected (O1, O2, 031, O32, 041, O42, O43, O5) in the annotated image (AB) contains information about identification, for example type, description, nature, of the electronic component to be detected (O1, O2, 031, O32, 041, O42, O43, O5) and/or its position on the image (AB) and/or a segmentation, i.e. information about all the pixels associated with the electronic component to be detected (O1, O2, 031, O32, 041, O42, O5) in the annotated image (AB).

10. Method according to one of claims 1 to 9, wherein each electronic component to be detected (O1, O2, 031, O32, 041, O42, O43, O5) has partial objects.

11. System for generating and providing training image data (TBD) for training an object recognition function (F0), wherein the system (1) comprises a first interface (S1), a second interface (S2) and a computing facility (R), wherein
- the first interface (S1) is configured to receive at least one annotated image (AB) and a further image (HB), wherein the annotated image (AB) has a multiplicity of electronic components to be detected (O1, O2, 031, O32, 041, O42, O43, O5) on a background (H) designed as a printed circuit board with annotations (L1, L2) assigned to the electronic components to be detected, wherein each annotation (L1, L2) defines an image area in which the at least one electronic component to be detected (O1, O2, 031, O32, 041, O42, O43, O5) is contained, and
no electronic components to be detected (O1, O2, 031, O32, 041, O42, O43, O5) are contained in the further image (HB),
- the computing facility (R) is configured to select an electronic component to be detected (O1, O2, 031, O32, 041, O42, O43, O5) in the annotated image (AB), to replace the image area described by the annotation (L1, L2) by overwriting said image area with an area of the further image (HB) that corresponds to said image area in order to remove the selected electronic component to be detected (O1, O2, 031, O32, 041, O42, O43, O5) together with the annotation (L1, L2) assigned to the selected electronic component from the annotated image (AB) and to generate a modified annotated image (MAB),
in order to generate a plurality of different modified annotated images, to repeat the steps S2 and S3 until the modified annotated image (MAB) no longer has any more electronic components to be detected (O1, O2, 031, O32, 041, O42, O43, O5), and
to add the different modified annotated images to the training image data (TBD),
- the second interface (S2) is configured to provide the training image data (TBD) containing the modified annotated image (MAB).

12. Computer program product comprising instructions which, when the computer program (PR) is executed by a computer, cause the computer to carry out a method according to one of claims 1 to 10.

13. Method for training an object recognition function (F0, F1), wherein the object recognition function (F0, F1) is trained with training image data (TBD), wherein the training image data (TBD) is provided according to a method according to one of claims 1 to 10.

14. Method for checking the accuracy of the population of printed circuit boards (FB) in the production of printed circuit boards, wherein
- at least one image is provided of a printed circuit board (FB) preferably produced according to a specific process step of a process,
- the at least one image is analysed by means of a trained function (F1) in order to check the accuracy of the population of the printed circuit board (FB), wherein the function (F1) has been trained with training image data (TBD), wherein the training image data (TBD) has been provided according to a method according to one of claims 1 to 10.

## Revendications

1. Procédé mis en œuvre par ordinateur pour disposer de données d'image d'entraînement (TBD) pour l'entraînement d'une fonction d'identification d'objets (F0), dans lequel le procédé comprend les stades suivants :
S1 se procurer au moins une image (AB) annotée, dans lequel l'image (AB) annotée a une pluralité de composants (O1, O2, 031, O32, 041, 042, 043, O5) électroniques à identifier sur un arrière plan constitué sous la forme d'une plaquette à circuit imprimé ayant les annotations (L1, L2) associées aux composants électroniques à identifier, dans lequel chaque annotation décrit une partie de l'image, dans laquelle le composant (O1, O2, O31, O32, 041, 042, 043, O5) électronique à identifier correspondant est contenu, et
une autre image (HB), dans laquelle des composants (O1, O2, 031, O32, 041, 042, 043, O5) électroniques à identifier ne sont pas contenus,
S2 sélectionner un composant (O1, O2, O31, O32, 041, 042, 043, O5) électronique à identifier dans l'image (AB) annotée,
S3 remplacer la partie de l'image décrite par l'annotation (L1, L2) en recouvrant cette partie de l'image par une partie, correspondante à cette partie d'image, de l'autre image (HB), pour retirer de l'image (AB) annotée le composant (O1, O2, 031, O32, 041, 042, 043, O5) électronique ensemble avec l'annotation (L1, L2) associée au composant (O1, O2, O31, O32, 041, 042, 043, O5) électronique sélectionné et produire une image (MAB) annotée modifiée, dans lequel, afin de produire plusieurs images annotées modifiées différentes, on répète les stades S2 et S3 jusqu'à ce que l'image (MAB) annotée modifiée n'ait plus de composant (O1, O2, 031, O32, 041, 042, 043, O5) électronique à identifier, dans lequel on ajoute les images annotées modifiées différentes aux données d'image (TBD) d'entraînement,
S4 se procurer les données (TBD) d'image d'entraînement contenant l'image (MAB) annotée modifiée.

2. Procédé suivant la revendication 1, dans lequel les composants (O1, O2, O31, O32, 041, 042, 043, O5) électroniques à identifier sont différents.

3. Procédé suivant la revendication 1 ou 2, dans lequel on traite ultérieurement l'image (AB) annotée et l'image (MAB) annotée modifiée, afin de produire d'autres images annotées, dans lequel on ajoute les autres images annotées aux données d'image d'entraînement (TBD).

4. Procédé suivant l'une des revendications 1 à 3, dans lequel la partie de l'autre image (HB) a la même dimension et/ou la même position que la partie d'image, décrite par l'annotation (L1, L2), de l'image (AB) annotée.

5. Procédé suivant l'une des revendications 1 à 4, dans lequel l'annotation (L1, L2) contient des informations sur la dimension et la position du au moins un composant électronique à identifier dans l'image (AB) annotée et/ou sur tous les pixels dans l'image (AB) annotée appartenant au composant électronique à identifier.

6. Procédé suivant l'une des revendications 1 à 5, dans lequel l'annotation (L1, L2) contient une délimitation du composant (O1, O2, O31, O32, 041, 042, 043, O5) électronique à identifier.

7. Procédé suivant la revendication 6, dans lequel la délimitation est constituée sous la forme d'un rectangle et est la meilleure en ce qu'elle délimite la partie d'image la plus petite possible, dans laquelle le composant (O1, O2, 031, O32, 041, 042, 043, O5) électronique à identifier délimité peut être encore contenu.

8. Procédé suivant l'une des revendication 1 à 7, dans lequel la sélection d'un composant (O1, O2, O31, O32, 041, 042, 043, O5) électronique à identifier dans l'image (AB) annotée s'effectue à l'aide de l'annotation (L1, L2) associée à ce composant électronique à identifier.

9. Procédé suivant l'une des revendications 1 à 8, dans lequel l'annotation (L1, L2) de chaque composant (O1, O2, O31, O32, 041, 042, 043, O5) électronique à identifier dans l'image (AB) annotée contient des informations sur une identification, par exemple un type, une description, une sorte du composant (O1, O2, 031, O32, 041, 042, 043, O5) électronique à identifier et/ou sa position sur l'image (AB) et/ou une segmentation, c'est-à-dire une information sur tous les pixels dans l'image (AB) annotée appartenant au composant (O1, O2, O31, O32, 041, 042, 043, O5) électronique à identifier.

10. Procédé suivant l'une des revendications 1 à 9, dans lequel chaque composant (O1, O2, O31, O32, 041, 042, 043, O5) électronique à identifier comporte des objets partiels.

11. Système pour produire et disposer de données d'image d'entraînement (TBD) pour l'entraînement d'une fonction d'identification d'objet (F0), dans lequel le système (1) comprend une première interface (S1), une deuxième interface (S2) et un dispositif (R) informatique, dans lequel
- la première interface (S1) est configurée pour recevoir au moins une image (AB) annotée et une autre image (HB), dans lequel
l'image (AB) annotée a une pluralité de composants (O1, O2, 031, O32, 041, 042, 043, O5) électroniques à identifier sur un arrière plan (H) constitué sur la forme d'une plaquette à circuit imprimé ayant les annotations (L1, L2) associées aux composants électroniques à identifier, dans lequel chaque annotation (L1, L2) décrit une partie de l'image, dans laquelle le composant (O1, O2, O31, O32, 041, 042, 043, O5) électronique à identifier correspondant est contenu, et
dans l'autre image (HB) des composants (O1, O2, O31, O32, 041, 042, 043, O5) électroniques à identifier ne sont pas contenus,
- le dispositif (R) informatique est configuré pour
sélectionner dans l'image (AB) annotée un composant (O1, O2, 031, O32, 041, 042, 043, O5) électronique à identifier, remplacer la partie de l'image décrite par l'annotation (L1, L2) en recouvrant cette partie de l'image par une partie, correspondante à cette partie de l'image, de l'autre image (HB), afin d'éliminer de l'image (AB) annotée le composant (O1, O2, O31, O32, 041, 042, 043, O5) électronique sélectionné ensemble avec l'annotation (L1, L2) associée au composant électronique sélectionné et produire une image (MAB) annotée modifiée,
pour produire plusieurs images annotées modifiées différentes, répéter les stades S2 et S3 jusqu'à ce que l'image (MAB) annotée modifiée n'ait plus de composant (O1, O2, 031, O32, 041, 042, 043, O5) électronique à identifier, et
ajouter les images annotées modifiées différentes aux données d'image d'entraînement (TBD),
- la deuxième interface S2 est configurée pour mettre les données d'image d'entraînement (TBD) contenant l'image (MAB) annotée modifiée à disposition.

12. Produit de programme d'ordinateur comprenant des instructions qui, lors de l'exécution du programme (PR) d'ordinateur par un ordinateur, font que celui-ci exécute un procédé suivant l'une des revendications 1 à 10.

13. Procédé d'entraînement d'une fonction d'identification d'objets (F0, F1), dans lequel on entraîne la fonction d'identification d'objets (F0, F1) par des données d'image d'entraînement (TBD), dans lequel les données d'image d'entraînement (TBD) sont mises à disposition par un procédé suivant l'une des revendications 1 à 10.

14. Procédé de commande de la pose de plaquettes (FB) à circuit imprimé dans la production de plaquettes à circuit imprimé, dans lequel
- on se procure au moins une image d'une plaquette (FB) à circuit imprimé fabriquée de préférence par un stade déterminé d'une opération,
- on analyse la au moins une image au moyen d'une fonction (F1) entraînée, afin de contrôler l'exactitude de la pose de la plaquette (FB) à circuit imprimé, dans lequel la fonction (F1) a été entraînée par des données d'image d'entraînement (TBD), dans lequel les données d'image d'entraînement (TBD) ont été mises à disposition par un procédé suivant l'une des revendications 1 à 10.
